Europäisches Patentamt

(19) European Patent Office

Office européen des brevets

(11) Veröffentlichungsnummer: **0 036 114**
**B1**

(12) **EUROPÄISCHE PATENTSCHRIFT**

(45) Veröffentlichungstag der Patentschrift:
**19.10.83**

(51) Int. Cl.³: **B 01 D 47/02,** B 01 D 50/00

(21) Anmeldenummer: **81101414.1**

(22) Anmeldetag: **26.02.81**

(54) **Zentrifugal-Saugwascher.**

(30) Priorität: **04.03.80 DE 3008240**

(43) Veröffentlichungstag der Anmeldung:
**23.09.81 Patentblatt 81/38**

(45) Bekanntmachung des Hinweises auf die Patenterteilung:
**19.10.83 Patentblatt 83/42**

(84) Benannte Vertragsstaaten:
**CH DE FR GB LI**

(56) Entgegenhaltungen:
**GB-A-1 095 049**
**US-A-2 770 319**
**US-A-3 756 580**
**US-A-3 791 104**

(73) Patentinhaber: **C. Gerhardt Fabrik & Lager chem.**
**Apparate GmbH + Co. KG,**
**Postfach 16 28 Bornheimerstrasse 100,**
**D-5300 Bonn 1 (DE)**

(72) Erfinder: **Langer, Alfred, Rheinstrasse 34,**
**D-5303 Bornheim-Hersel (DE)**

(74) Vertreter: **Weickmann, Heinrich, Dipl.-Ing. et al,**
**Patentanwälte Dipl.-Ing. H. Weickmann Dipl.-Phys.Dr. K.**
**Fincke Dipl.-Ing. F.A. Weickmann Dipl.-Chem. B. Huber**
**Dr.-Ing. H. Liska Möhlstrasse 22,**
**D-8000 München 86 (DE)**

Zentrifugal-Saugwascher

Die Erfindung betrifft einen Zentrifugal-Saugwascher für ein gas- oder dampfförmiges Medium mit einem Behälter für Waschflüssigkeit und einer an ein Zuleitungsrohr für das zu waschende Medium angeschlossenen Schaufelradpumpe, deren in der Waschflüssigkeit rotierendes, von stationären Leitschaufeln umgebenes Schaufelrad das zu waschende Medium radial in die Waschflüssigkeit eintreibt.

Zentrifugalwascher dieser Art sind aus den US-Patenten 880 506 und 3 791 104 bekannt. Bei beiden Geräten werden die zu waschenden Gase oder Dämpfe vom Schaufelrad zentrifugal beschleunigt und gegen die radial um das Schaufelrad herum angeordneten stationären Leitschaufeln geschleudert. Die Leitschaufeln zerteilen die in die Waschflüssigkeit eingebrachten Gas- bzw. Dampfblasen in kleine Bläschen. Die Zahl der Leitschaufeln ist relativ groß, um genügend Leitschaufelkanten zum Zerteilen der Gasblasen verfügbar zu haben. Dies erhöht den konstruktiven Aufwand der Geräte.

Bei den bekannten Geräten handelt es sich um reine Gaswascher, deren Saugleistung gering ist. Bei dem Gerät des US-Patents 880 506 ist das Schaufelrad als rotierender Hohlzylinder ausgebildet, dessen Mantel mit einer Vielzahl radialer Düsen versehen ist, die das Gas bzw. den Dampf radial in die Waschflüssigkeit und damit gegen die Leitschaufeln schleudern. Der Strömungswiderstand der Düsen begrenzt die Förderleistung des Schaufelrads, wenn die Zerteilwirkung der Leitschaufeln und damit das Gaswaschvermögen des Geräts hinreichend groß sein soll.

Bei dem Gerät des US-Patents 3 791 104 sind zwei Schaufelräder vorgesehen, von denen das erste die Gasblasen radial zu den Leitschaufeln hin treibt, während das zweite Schaufelrad die Waschflüssigkeit axial zum ersten Flügelrad hin drückt, um den Kontakt der Waschflüssigkeit mit dem ersten Schaufelrad und den Leitschaufeln zu verstärken. Der auf das erste Schaufelrad wirkende Gegendruck des zweiten Schaufelrads mindert aber die Saugleistung.

Die beiden vorstehend erläuterten Geräte eignen sich aufgrund ihrer geringen Saugleistung nur bedingt zum Absaugen der zu waschenden Gase oder Dämpfe. Dies ist insbesondere dann von Nachteil, wenn aggressive Gase oder Dämpfe abgesaugt werden müssen, da bisherige Pumpen hoher Saugleistung, beispielsweise mechanische Kolbenpumpen durch Vorschalten gesonderter Gaswäscher geschützt werden mußten.

Aufgabe der Erfindung ist es, einen konstruktiv einfachen Weg zur Erhöhung der Saugleistung von Zentrifugal-Saugwaschern anzugeben, deren Schaufelrad in der Waschflüssigkeit rotiert.

Diese Aufgabe wird erfindungsgemäß dadurch gelöst, daß die Zuleitung innerhalb der Waschflüssigkeit wenigstens eine Einlaßöffnung für Waschflüssigkeit aufweist.

Im Unterschied zu den bekannten Geräten wird der Schaufelradpumpe nicht nur das zu waschende, gas- oder dampfförmige Medium, sondern auch Waschflüssigkeit zugeführt. Bereits im Zuleitungsrohr findet eine innige Durchmischung des zu reinigenden Mediums mit der Waschflüssigkeit statt, was sich vorteilhaft auf das Waschvermögen auswirkt. Da das Schaufelrad der Schaufelradpumpe nicht nur das zu reinigende Gas bzw. den Dampf abschleudert, sondern auch die spezifisch schwerere Waschflüssigkeit, ergibt sich eine Erhöhung der Saugleistung bei relativ hohem Saugunterdruck.

Von wesentlicher Bedeutung für das Waschvermögen sind Ausführungsformen der Leitschaufeln bzw. des Schaufelrads, wie sie in den Ansprüchen 2 bis 6 beschrieben sind. Während die Leitschaufeln der bekannten Geräte als Flüssigkeitsbremse wirken, fördern die in diesen Ansprüchen angegebenen Ausführungsformen die im wesentlichen ungebremste Zerteilung der Gas- bzw. Dampfblasen in feinste Bläschen. Für eine ausreichende Zerteilwirkung sind lediglich einige wenige, vorzugsweise lediglich drei Leitschaufeln, erforderlich, so daß die Motorleistung zum Antrieb des Schaufelrads klein gehalten werden kann.

Der erfindungsgemäße Zentrifugal-Saugwascher kann bevorzugt zum Auswaschen heißer und/oder aggressiver Medien eingesetzt werden. Anspruch 9 beschreibt eine Ausführungsform, bei der durch langsame Zuführung kalter Waschflüssigkeit auch Medien höherer Temperatur, z. B. heiße Dämpfe, im Dauerbetrieb abgesaugt und ausgewaschen werden können.

Im folgenden soll ein Ausführungsbeispiel der Erfindung anhand von Zeichnungen näher erläutert werden. Es zeigt

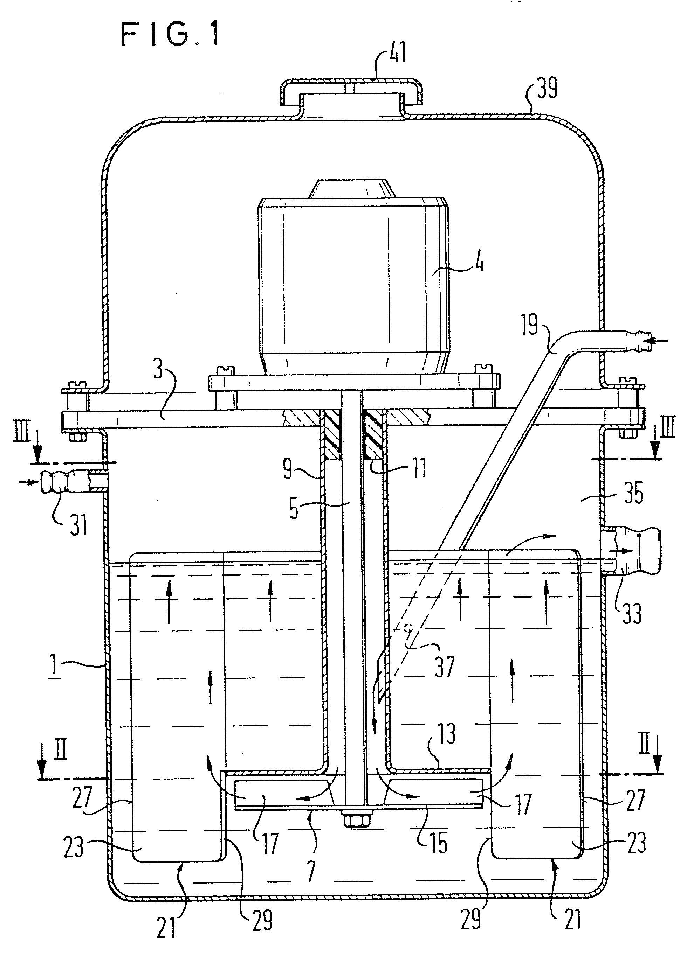

Fig. 1 einen Vertikalschnitt durch einen Zentrifugal-Saugwascher,

Fig. 2 einen Horizontalschnitt durch den Saugwascher nach Fig. 1 entlang einer Linie II-II und

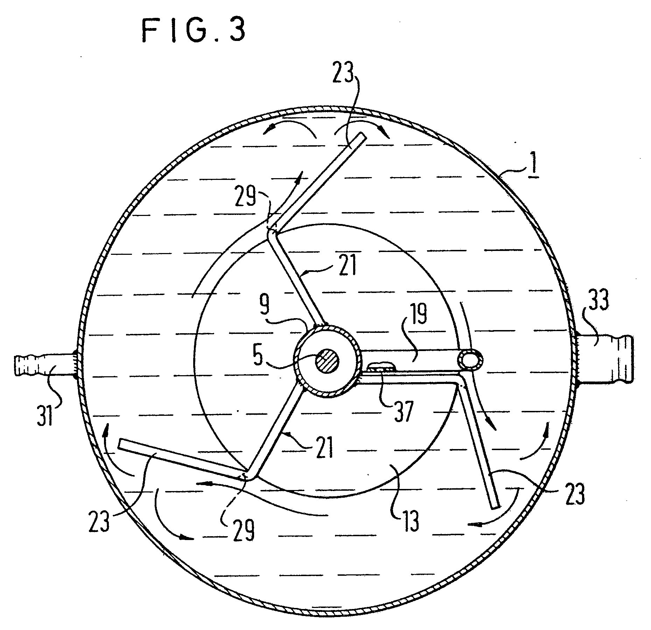

Fig. 3 einen Horizontalschnitt durch den Saugwascher nach Fig. 1 entlang einer Linie III-III.

Der Zentrifugal-Saugwascher umfaßt einen mit vertikaler Zylinderachse angeordneten, kreiszylindrischen Behälter 1, der nach oben hin durch einen Deckelflansch 3 dicht verschlossen ist. Auf dem Deckelflansch 3 sitzt außerhalb des Behälters 1 ein Elektromotor 4, dessen zur Zylinderachse des Behälters 1 gleichachsige Abtriebswelle 5 an ihrem im Behälter 1 endenden, freien Ende ein Schaufelrad 7 drehfest trägt. Die Abtriebswelle 5 ist von einem gleichachsig angeordneten Steigrohr 9 umschlossen und mittels einer Dichtung 11 gegen den Deckelflansch 3 abgedichtet. Das vertikal untere Ende des Steigrohrs 9 trägt dicht oberhalb des Schaufelrads 7 eine horizontale, zur Abtriebswelle 5 gleichachsige Ringscheibe 13. Das Schaufelrad 7 besteht aus einer ebenfalls horizontalen Kreisscheibe 15, von deren Oberseite mehrere, im Ausführungsbeispiel sechs Rippen 17 zur Ringscheibe 13 hin abstehen. Die Rippen erstrecken sich längs der Kreisscheibe 15 in Parallelebenen zur Drehachse zwischen dem Umfang der Kreisscheibe 15 und einer im Abstand von der Abtriebswelle 5 gelegenen Stelle. Ein Saugrohr 19 führt von außerhalb des Behälters 1 in das Steigrohr 9 hinein.

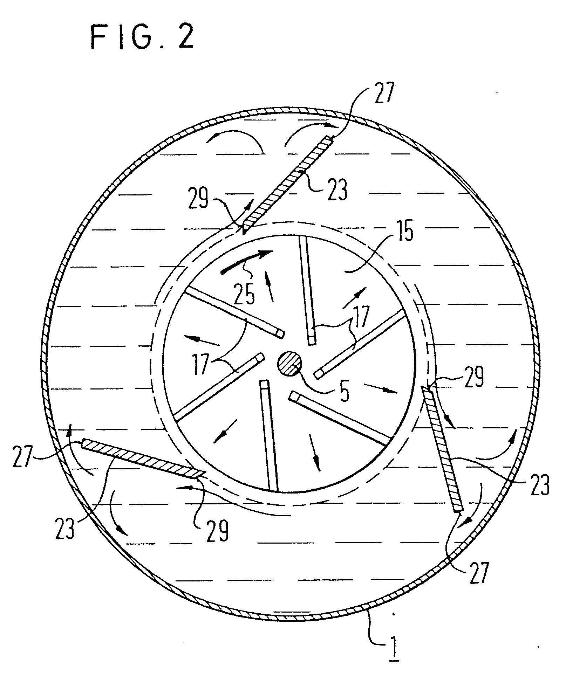

Radial außerhalb des Schaufelrads 7 sind stationäre Leitschaufeln 21 vorgesehen, die sich sowohl nach oben als auch nach unten über das Schaufelrad 7 hinaus erstrecken. Die radial außerhalb der axialen Projektionsfläche des Schaufelrads 7 gelegenen Abschnitte 23 der Leitschaufeln 21 haben die Form ebener, in radialem Abstand zu der Drehachse des Schaufelrads 7 angeordneter Platten, die sich in Drehrichtung des Schaufelrads 7 an dessen Umfang anschließen. Die Drehrichtung des Schaufelrads 7 ist in Fig. 2 durch einen Pfeil 25 eingezeichnet. Die der Wand des Behälters 1 benachbarten, freien Kanten 27 der Schaufelabschnitte 23 verlaufen vertikal und im Abstand von dem Behälter 1, so daß zwischen den Kanten 27 und dem Behälter 1 Durchtrittsspalten verbleiben. Oberhalb des Schaufelrads 7 sind die Leitschaufelabschnitte 23 etwa radial zum Steigrohr 9 hin abgebogen und an diesem befestigt. Die radial unterhalb der Ringscheibe 13 gelegenen, dem Schaufelrad 7 radial zugewandten Anströmkanten der Leitschaufelabschnitte 23 sind zu Schneiden 29 geschärft.

Über einen im oberen Teil des Behälters 1 gelegenen Zulauf 31 kann bis zur Höhe eines etwa im Bereich der Oberkante der Leitschaufeln 21 gelegenen Überlaufs 33 Wasch- oder Neutralisationsflüssigkeit in den Behälter 1 eingefüllt werden. Über das Saugrohr 19 und das Steigrohr 9 saugt die aus dem Schaufelrad 7 und der Ringscheibe 13 bestehende Schaufelradpumpe das zu waschende Gas bzw. den zu waschenden Dampf an und treibt ihn wie durch Pfeile angedeutet, radial nach außen gegen die Schneiden 29 der Leitschaufeln 21. Die Schneiden 29 zerteilen Gasblasen in feinste Gasbläschen. Der Überlauf 33 reicht bis in einen Druckraum 35 oberhalb des Pegels der Waschflüssigkeit, so daß die gewaschenen Gase und Dämpfe gleichfalls über den Überlauf 33 abgeleitet werden können.

Um die Saugleistung, den Saugunterdruck und das Auswaschvermögen des Zentrifugal-Saugwaschers zu steigern, ist an einer unterhalb des Überlaufs 33, d. h. in der Waschflüssigkeit gelegenen Stelle, wenigstens eine Öffnung 37 in der Saugleitung 19 vorgesehen, über die die Waschflüssigkeit auch in die Saugleitung 19 und das Steigrohr 9 eintreten kann. Die Injektorwirkung der Öffnung 37 zerstäubt die eintretende Waschflüssigkeit und vermischt sie bereits im Saugrohr 19 und dem Steigrohr 9 mit dem zu waschenden Gas bzw. Dampf. Das Schaufelrad 7 schleudert somit nicht nur das zu waschende Gas bzw. den Dampf gegen die Leitschaufeln 21, sondern auch die spezifisch schwerere Waschflüssigkeit, wodurch die Saugleistung erheblich erhöht wird.

Der Elektromotor 4 ist zusammen mit seiner elektrischen Installationsanlage mit einer Abdeckhaube 39 gefahrensicher abgedeckt. Eine Belüftungsklappe 41 sorgt für ausreichende Belüftung.

Zum Auswaschen heißer Gase oder Dämpfe kann über den Zulauf 31 kontinuierlich kalte Waschflüssigkeit zugeführt werden. Der Überlauf 33, an den ggf. ein Abflußschlauch angeschlossen sein kann, sorgt für einen kontinuierlichen Abzug der Waschflüssigkeit. Der Druckraum 35 oberhalb des Pegels der Waschflüssigkeit ist so ausreichend dimensioniert, daß in ihm eine den Waschvorgang förderliche Turbulenz auftreten kann.

**Patentansprüche**

1. Zentrifugal-Saugwascher für gas- oder dampfförmige Medien mit einem Behälter (1) für Waschflüssigkeit und einer an eine Zuleitung (9, 19) für das zu waschende Medium angeschlossenen Schaufelradpumpe, deren in der Waschflüssigkeit rotierendes, von stationären Leitschaufeln (21) umgebenes Schaufelrad (7) das zu waschende Medium radial in die Waschflüssigkeit eintreibt, dadurch gekennzeichnet, daß die Zuleitung (9, 19) innerhalb der Waschflüssigkeit wenigstens eine Einlaßöffnung (37) für Waschflüssigkeit aufweist.

2. Zentrifugal-Saugwascher nach Anspruch 1, dadurch gekennzeichnet, daß jede Leitschaufel (21) radial außerhalb des Schaufelrads (7) im radialen Abstand zu einer die Drehachse einschließenden Durchmesserebene des Schaufelrads (7) derart angeordnet ist, daß ihre dem Schaufelrad (7) zugewandte Anströmkante (29) gegen die Drehrichtung des Schaufelrads (7) weist.

3. Zentrifugal-Saugwascher nach Anspruch 2, dadurch gekennzeichnet, daß zumindest die dem Umfang des Schaufelrads (7) benachbarten Bereiche der Anströmkanten (29) geschärft sind.

4. Zentrifugal-Saugwascher nach Anspruch 2, dadurch gekennzeichnet, daß der Behälter (1) als zur Drehachse des Schaufelrads (7) gleichachsiger Hohl-Kreiszylinder ausgebildet ist und daß die Leitschaufeln (21) achsferne Abströmkanten (27) aufweisen, die zumindest über den größten Teil ihrer axialen Länge mit radialem Abstand zum Innenmantel des Behälters (1) verlaufen.

5. Zentrifugal-Saugwascher nach Anspruch 2, dadurch gekennzeichnet, daß die Leitschaufeln (21) axial seitlich des Schaufelrads (7) zur Drehachse des Schaufelrads (7) abgebogen und im wesentlichen entlang ihrer gesamten auf dieser axialen Seite sich anschließenden axialen Länge mit einem zur Drehachse des Schaufelrads (7) gleichachsigen, das zu waschende Medium dem Schaufelrad (7) zuführenden Rohr (9) verbunden sind.

6. Zentrifugal-Saugwascher nach Anspruch 2, dadurch gekennzeichnet, daß der Durchmesser des Schaufelrads (7) etwa gleich dem halben Durchmesser des Behälters (1) ist.

7. Zentrifugal-Saugwascher nach Anspruch 1, dadurch gekennzeichnet, daß das Schaufelrad (7) als drehfest auf einer Antriebswelle (5) sitzende Scheibe (15) ausgebildet ist, die auf ihrer oben gelegenen Seite Rippen (17) trägt und daß die Antriebswelle (5) in einem stationären, das Medium dem Schaufelrad (7) zuführenden Steigrohr (9) drehbar angeordnet ist, welches dicht oberhalb der Oberkante der Rippen (17) seinerseits gleichachsig eine Ringscheibe (13) trägt.

8. Zentrifugal-Saugwascher nach Anspruch 7, dadurch gekennzeichnet, daß die Einlaßöffnung (37) bzw. Einlaßöffnungen an einem in das Steigrohr (9) mündenden Saugrohr (19) vorgesehen sind.

9. Zentrifugal-Saugwascher nach Anspruch 1, dadurch gekennzeichnet, daß der Behälter (1) einen Zulauf (31) für die kontinuierliche Zufuhr von Waschflüssigkeit und einem nach dem Überlaufprinzip arbeitenden Ablauf (33) für Waschflüssigkeit aufweist.

## Claims

1. Centrifugal suction washer for gaseous or vaporous media, with a container (1) for washing liquid and with a vane wheel pump which is connected up to a supply pipe (9, 19) for the medium to be washed and of which the vane wheel (7), rotating in the washing liquid and surrounded by stationary guide blades (21), forces the medium radially into the washing liquid, characterized by the fact that the supply pipe (9, 19) is provided, inside the washing liquid, with at least one inlet aperture (37) for washing liquid.

2. Centrifugal suction washer in accordance with Claim 1, characterized by the fact that each guide blade (21) is positioned radially outside the vane wheel (7) and at a radial distance from a certain plane, enclosing the rotation axis, of the diameter of the vane wheel (7) in such a way that its approach flow edge (29) facing towards the vane wheel (7) points towards the direction of rotation of the vane wheel (7).

3. Centrifugal suction washer in accordance with Claim 2, characterized by the fact that at least those zones of the approach flow edges (29) which are adjacent to the periphery of the vane wheel (7) are sharpened.

4. Centrifugal suction washer in accordance with Claim 2, characterized by the fact that the container (1) is constructed as a hollow circular cylinder coaxial with the rotation axis of the vane wheel (7) and that the guide blades (21) have off-flow edges (27) at a distance from the axis which at least over the greater part of their axial length take their course at a radial distance from the internal casing of the container (1).

5. Centrifugal suction washer in accordance with Claim 2, characterized by the fact that the guide blades (21), axially to the side of the vane wheel (7), are bent to the rotation axis of the vane wheel (7) and that, substantially along their entire axial length which follows on the said axial side, they are connected with a pipe (9) coaxial to the rotation axis of the vane wheel (7) and supplying the vane wheel (7) with the medium to be washed.

6. Centrifugal suction washer in accordance with Claim 2, characterized by the fact that the diameter of the vane wheel (7) is approximately equal to half that of the container (1).

7. Centrifugal suction washer in accordance with Claim 1, characterized by the fact that the vane wheel (7) is constructed as a disc (15) which is mounted on a driving shaft (5) non-rotatably in relation thereto and which is provided on the top with ribs (17) and that the driving shaft (5) is rotatably mounted in a stationary riser pipe (9) which supplies the vane wheel (7) with the medium to be washed and which in its turn is provided, just above the upper edge of the ribs (17), with an annular disc (13) coaxial therewith.

8. Centrifugal suction washer in accordance with Claim 7, characterized by the fact that the inlet aperture (37) or inlet apertures are provided on a suction pipe (19) leading into the riser pipe (9).

9. Centrifugal suction washer in accordance with Claim 1, characterized by the fact that the container (1) has a feed inlet (31) for the continuous supply of washing liquid and a discharge outlet (33), operating on the overflow principle, for washing liquid.

## Revendications

1. Laveur à aspiration centrifuge, pour milieux gazeux ou sous forme de vapeur, comportant un récipient (1) pour liquide de lavage et une pompe à roue à ailettes reliée à une conduite (9, 19) pour le milieu à laver, dont la roue à ailettes (7), entourée d'ailettes de guidage fixes (21), tourne dans le liquide de lavage et fait entrer le milieu à laver radialement dans le liquide de lavage, caractérisé en ce que la conduite (9, 19) comporte, dans le liquide de lavage, au moins une ouverture (37) d'entrée pour ce liquide de lavage.

2. Laveur à aspiration centrifuge selon la revendication 1, caractérisé en ce que chaque ailette de guidage (21) est disposée radialement à l'extérieur de la roue à ailettes (7) à une distance radiale d'un plan diamétral, contenant l'axe de rotation, de la roue à ailettes (7), telle que son bord d'attaque (29) tourné du côté de la roue à ailettes (7) s'étend à l'encontre du sens de rotation de la roue à ailettes.

3. Laveur à aspiration centrifuge selon la revendication 2, caractérisé en ce qu'au moins les zones des bords d'attaque (29) voisines de la périphérie de la roue à ailettes (7) sont aiguisées.

4. Laveur à aspiration centrifuge selon la revendication 2, caractérisé en ce que le récipient (1) est constitué sous la forme d'un cylindre de révolution creux centré sur l'axe de rotation de la roue à ailettes (7), et en ce que les ailettes de guidage (21) comportent des bords de fuite (27) éloignés de l'axe, qui au moins sur la plus grande partie de leur longueur axiale, s'étendent à distance radiale de la surface intérieure du récipient (1).

5. Laveur à aspiration centrifuge selon la revendication 2, caractérisé en ce que les ailettes de guidage (21) sont pliées axialement, latéralement par rapport à la roue à ailettes (7), vers l'axe de rotation de celle-ci, et essentiellement le long de la totalité de leur longueur axiale se raccordant à ce côté axial, sont reliées à une conduite (9) amenant le milieu à laver à la roue à ailettes (7), cette conduite étant centrée sur l'axe de rotation de cette roue.

6. Laveur à aspiration centrifuge selon la revendication 2, caractérisé en ce que le diamètre de la roue à ailettes (7) est à peu près égal à la moitié du diamètre du récipient (1).

7. Laveur à aspiration centrifuge selon la revendication 1, caractérisé en ce que la roue à ailettes (7) est constituée par un disque (15) calé en rotation sur un arbre d'entraînement (5), sur sa face supérieure ce disque supportant des membrures (17), et en ce que l'arbre d'entraînement (5) est monté rotatif dans une conduite ascendante fixe (9) amenant le milieu à la roue à ailettes, laquelle, de son côté, porte, juste au-dessus des bords supérieurs desdites membrures (17), un disque annulaire coaxial (13).

8. Laveur à aspiration centrifuge selon la revendication 7, caractérisé en ce que la ou les ouvertures d'entrée (37) sont prévues dans une conduite d'aspiration (19) débouchant dans la conduite ascendante (9).

9. Laveur à aspiration centrifuge selon la revendication 1, caractérisé en ce que le récipient (1) comporte une entrée (31) pour l'amenée continue de liquide de lavage, et une sortie (33) de liquide de lavage, travaillant par tropplein.

# FIG.1

FIG. 2

FIG.3